# EUROPEAN PATENT APPLICATION

(11) **EP 3 160 203 A1**
(43) Date of publication of application: **26.04.2017**
(21) Application number: 14895166.8
(22) Date of filing: 19.06.2014
(51) Int. Cl.: H04W 72/08, H04W 92/18

(54) **WIRELESS COMMUNICATION SYSTEM, WIRELESS COMMUNICATION METHOD, WIRELESS DEVICE, AND WIRELESS BASE STATION**

(71) Applicant: Fujitsu Limited, Kawasaki-shi, Kanagawa 211-8588 (JP)
(72) Inventor: JITSUKAWA, Daisuke, Kawasaki-shi Kanagawa 211-8588 (JP); TANAKA, Yoshinori, Kawasaki-shi Kanagawa 211-8588 (JP); KAWASAKI, Yoshihiro, Kawasaki-shi Kanagawa 211-8588 (JP)
(74) Representative: Lewin, David Nicholas
(86) International application number: PCT/JP2014/066342
(87) International publication number: WO 2015/194015

(57) **Abstract**

A first wireless device (20-3) that performs wireless communication with a wireless base station (10) transmits a signal, a second wireless device (20-2) that performs device-to-device communication without going through the wireless base station (10) receives the signal, and information of a radio resource of the received signal that is relatively higher in interference level for the device-to-device communication is transmitted to the wireless base station (10).

## Description

### TECHNICAL FIELD

The embodiments discussed herein are related to a wireless communication system, a wireless communication method, a wireless device, and a wireless base station.

### BACKGROUND ART

In the standardization of the Long Term Evolution (LTE) or the LTE-Advanced of the 3rd Generation Partnership Project (3GPP), a device to device (D2D) communication is under discussion.

The D2D communication is an example of a technique in which wireless communication is directly performed between wireless devices such as mobile stations without going through a wireless base station. The D2D communication has been discussed as an example of alternative or auxiliary public safety communication in a scenario in which it is unable to use wireless communication (also referred to as "cellular communication") going through a wireless base station, for example, due to a large-scale disaster.

### List of Related Art Documents

### Non-patent Documents

Non-Patent Document 1: RP-122009, "Study on LTE Device to Device Proximity Services," Qualcomm, Dec. 2012.
Non-Patent Document 2: TR36.843 V0.3.1, "Study on LTE Device to Device Proximity Services - Radio Aspects," Nov. 2013.

### SUMMARY OF INVENTION

### PROBLEM TO BE SOLVED BY THE INVENTION

However, in the discussion related to the D2D communication, influence of interference between the cellular communication and the D2D communication has not sufficiently reviewed. For this reason, there are cases in which performance, characteristics, efficiency, and the like of the wireless communication system (also referred to collectively as "wireless communication performance") are lowered.

In one aspect, it is an object of the present invention to improve the wireless communication performance.

### MEANS TO SOLVE THE PROBLEM

In one aspect, a wireless communication system includes a first wireless device that performs wireless communication with a wireless base station and a second wireless device that performs device-to-device communication without going through the wireless base station, wherein the second wireless device is configured to receive a signal transmitted from the first wireless device and transmit information of a radio resource of the received signal to the wireless base station, the radio resource being relatively higher in interference level for the device-to-device communication than that of another resource.

In one aspect, a wireless communication method includes transmitting, by a first wireless device that performs wireless communication with a wireless base station, a signal and receiving, by a second wireless device, the signal and transmitting information of a radio resource of the received signal to the wireless base station, the second wireless device performing device-to-device communication without going through the wireless base station, the radio resource being relatively higher in interference level for the device-to-device communication than that of another resource.

In one aspect, a wireless device is a wireless device that performs device-to-device communication without going through a wireless base station and includes a first receiver configured to receive a signal transmitted by another wireless device that performs wireless communication with the wireless base station, a detector configured to detect a radio resource being relatively higher in interference level of the signal received by the first receiver for the device-to-device communication than that of another resource, and a transmitter configured to transmit information of the radio resource detected by the detector to the wireless base station.

In one aspect, a wireless base station is a wireless base station that performs wireless communication with a first wireless device and includes a receiver configured to receive information of a radio resource from a second wireless device that performs device-to-device communication without going through the wireless base station, the radio resource being relatively higher in interference level of a signal transmitted by the first wireless device for the device-to-device communication than that of another resource.

### EFFECTS OF INVENTION

As one aspect, it is possible to improve the wireless communication performance.

### BRIEF DESCRIPTION OF DRAWINGS

Fig. 1 is a diagram illustrating an exemplary configuration of a wireless communication system according to a first embodiment.
Fig. 2A is a diagram schematically illustrating an example in which different frequency resources are used in D2D communication and cellular communication.
Fig. 2B is a diagram schematically illustrating an example in which the same frequency resources are used in D2D communication and cellular communication.
Fig. 3 is a diagram schematically illustrating an example in which a mobile station that performs D2D communication transmits interference source resource information of cellular communication to a wireless base station in the wireless communication system illustrated in Fig. 1.
Fig. 4 is a diagram illustrating an example of a sub-frame and a sub-band used for SRS transmission.
Fig. 5 is a diagram illustrating an example of a process of generating a transmission signal of a PDCCH in the wireless base station illustrated in Figs. 1 and 3.
Fig. 6 is a diagram illustrating a transmission timing of a PUSCH of the mobile station illustrated in Figs. 1 and 3.
Fig. 7 is a block diagram illustrating an exemplary configuration of a wireless base station illustrated in Figs. 1 and 3.
Fig. 8 is a block diagram illustrating an exemplary configuration of the mobile station illustrated in Figs. 1 and 3 that performs D2D communication.
Fig. 9 is a block diagram illustrating an exemplary configuration of the mobile station that performs cellular communication, which is illustrated in Figs. 1 and 3.
Fig. 10 is a sequence diagram illustrating an operation of the wireless communication system (a first interference prevention method) illustrated in Figs. 1 and 3.
Fig. 11A to Fig. 11D are diagrams illustrating an example of the flow of interference level measurement and scheduling in the first interference prevention method.
Fig. 12 is a block diagram illustrating an exemplary configuration of a wireless base station according to a second embodiment.
Fig. 13 is a block diagram illustrating an exemplary configuration of a mobile station that performs D2D communication according to the second embodiment.
Fig. 14 is a block diagram illustrating an exemplary configuration of a mobile station that performs cellular communication according to the second embodiment.
Fig. 15 is a sequence diagram illustrating an operation of the wireless communication system (a second interference prevention method) according to the second embodiment.

### MODE FOR CARRYING OUT THE INVENTION

Hereinafter, an exemplary embodiment of the present invention will be described with reference to the appended drawings. The following embodiment is merely an example and not intended to exclude the application of various modifications or techniques that are not explicitly described below. Further, various exemplary forms to be described below may be appropriately combined and carried out. In the drawings used in the following embodiment, the same reference numerals denote the same or similar parts unless otherwise set forth herein.

### (First embodiment)

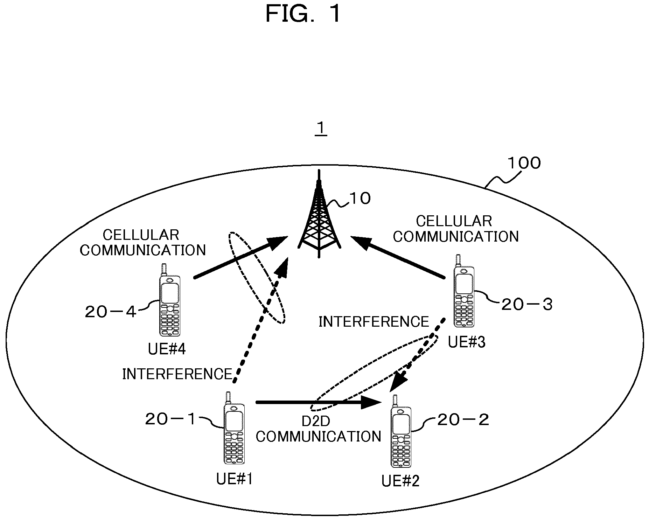

Fig. 1 is a diagram illustrating an exemplary configuration of a wireless communication system according to a first embodiment. A wireless communication system 1 illustrated in Fig. 1 includes, for example, one or more wireless base stations 10 and a plurality of mobile stations 20-1 to 20-N (#1 to #N) (N is an integer of 2 or larger). Here, Fig. 1 illustrates an example in which N=4, that is, four mobile stations 20-1 to 20-4 are arranged. When it is unnecessary to distinguish the mobile stations 20-1 to 20-N, they are also referred to simply as a "mobile station 20."

The wireless base station 10 forms a wireless area 100. The mobile station 20 located within the wireless area 100 can perform wireless communication with the wireless base station 10. The wireless base station 100 may form a plurality of wireless areas 100. The wireless area 100 is set according to an arrival range of a radio wave transmitted from the wireless base station 10. A maximum arrival range of the radio wave may be considered as being set according to maximum transmission power of the wireless base station 10.

The "wireless area" is also referred to as a "cell," a "coverage area," or a "communication area." The "cell" may be divided into "sector cells." The "cell" may include a macro cell or a small cell. The small cell is an example of a cell having a smaller radio wave arrival range (coverage) than the macro cell. A name of the small cell may differ according to the coverage area. For example, the small cell is also called a "femto cell," a "pico cell," a "micro cell," a "nano cell," a "metro cell," a "home cell," or the like.

The wireless base station 10 is also referred to as a "base station (BS)," a "node B (NB)," or an "evolved NB (eNB)."

The mobile station 20 is an example of a wireless device capable of performing wireless communication with the wireless base station 10 when located within the cell 100. The mobile station 20 may be also called a wireless apparatus, a mobile terminal, a terminal device, or a user equipment (UE). An example of the mobile station 20 is a mobile phone or a smart phone. However, the mobile station 20 may be a wireless device fixed to a mobile object such as a vehicle, an aircraft, or a ship. For example, the wireless device may include a sensor device or a meter (a measurement device) with a wireless communication function that forms a sensor network.

The wireless communication between the mobile station 20 and the wireless base station 10 is also referred to as "cellular communication." For example, a wireless communication scheme conforming to the LTE or the LTE-Advanced of the 3GPP may be applied as a wireless communication scheme of the cellular communication. Alternatively, a wireless communication scheme conforming to a scheme such as "Worldwide Interoperability for Microwave Access, (WiMAX)" (a registered trademark) may be applied to the wireless communication between the mobile station 20 and the wireless base station 10.

The wireless base station 10 may be connected to a core network which is not illustrated in Fig. 1 to be able to perform communication. The core network may include a serving gateway (SGW), a packet data network gateway (PGW), a mobility management entity (MME), and the like. A communication network including the core network is also referred to as an "access network." The access network is also referred to as an "Evolved Universal Terrestrial Radio Access Network (E-UTRAN)."

The wireless base station 10 may be connected with the core network, for example, via a wired interface. The wired interface is also referred to as an "S1 interface." However, the wireless base station 10 may be connected with the core network via a wireless interface to be able to perform communication.

The wireless base station 10 may be connected with another wireless base station 10 which is not illustrated in Fig. 1, for example, a wired interface to be able to perform communication. The wired interface is also referred to as an "X2 interface." However, the wireless base station 10 may be connected with another wireless base station via a wireless interface.

The wireless base station 10 allocates radio resources to the cellular communication with the mobile station 20 located within the cell 100 formed by its own station 10. The allocation of the radio resources is also referred to as "scheduling." The mobile station 20 performs the cellular communication with the wireless base station 10 using the radio resources allocated from the wireless base station 10.

The radio resources may be identified by, for example, a time and a frequency. For example, the radio resources may be identified in units of divisional resources obtained by dividing the radio resources available to the wireless communication system 1 according to a time and frequency. The divisional resources are also referred to as a "resource block (RB)" or also referred to as a "resource element (RE)."

The RE may be a minimum unit for the radio resource allocation and may be defined as, for example, a symbol of a subcarrier. A RE group (REG) may be formed by a plurality of REs. A RB may be formed by a plurality of REs. For example, a RB may be formed by 12 subcarriers in a frequency domain x7 or 6 symbols in a time domain. The allocation (scheduling) of the radio resources may be performed in units of RBs.

The mobile station 20 can perform communication directly with another mobile station 20 without going through the wireless base station 10. This communication is also referred to as "device to device (D2D)" communication, "communication between wireless devices," or "direct communication between wireless devices." Fig. 1 schematically illustrates an example in which, for example, a part of a UE 20-1 and a UE 20-2 perform the D2D communication.

The D2D communication is useful in a scenario even in which the infrastructure of the cellular communication is operated. For example, the UE 20 can perform communication directly with a neighboring UE 20 without going through the wireless base station 10 at a remote site, and thus power consumption of the UE 20 can be reduced. Further, since traffic of the cellular communication is offloaded to the D2D communication, a load of the core network side can be reduced.

The radio resources used for the D2D communication may be also allocated by the wireless base station 10. The UE 20 performs the D2D communication with another UE 20 using the radio resources allocated from the wireless base station 10. The UE 20 that performs the D2D communication is also referred to as a "DUE" for the sake of convenience. On the other hand, the UE 20 that performs the cellular communication with the wireless base station 10 is also referred to as a "CUE" for the sake of convenience. The UE 20 may support both the cellular communication and the D2D communication.

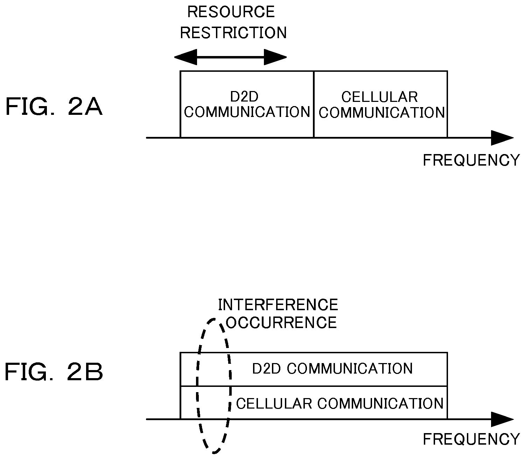

The allocation of the radio resources (for example, the frequency resources) used for the D2D communication and the cellular communication has tradeoff relation between a frequency use efficiency and interference. For example, when the frequency resources used for the D2D communication are different from the frequency resources used for the cellular communication as schematically illustrated in Fig. 2A, no interference occurs between the D2D communication and the cellular communication. However, since there is a limitation to available frequency resources, a system capacity of the wireless communication system 1 is likely to be reduced.

On the other hand, for example, when the same frequency resources are shared by the D2D communication and the cellular communication as schematically illustrated in Fig. 2B, available frequency resources are increased to be larger than in Fig. 2A. However, when the same frequency resources are allocated to the D2D communication and the cellular communication, interference is likely to occur between radio waves.

For example, a signal of the D2D communication may be transmitted using a frequency band allocated to uplink (UL) communication in cellular communication of Frequency Division Duplex (FDD). Thus, the D2D communication may interfere with the UL cellular communication.

For example, in Fig. 1, the same frequency resources are assumed to be allocated to the D2D communication between the DUE 20-1 and the DUE 20-2 and the UL cellular communication between the CUEs 20-3 and 20-4 and the wireless base station 10.

In this case, when the D2D communication and the cellular communication are performed with a small distance, the D2D communication and the cellular communication are likely to interfere with each other. For example, UL transmission (a transmission radio wave) from the CUE 20-3 to the wireless base station 10 is likely to interfere with a transmission radio wave from the DUE 20-1 to the DUE 20-2.

The transmission radio wave from the DUE 20-1 to the DUE 20-2 is likely to interfere with UL transmission (a transmission radio wave) from the CUE 20-3 to the wireless base station 10.

Further, since the CUE 20-4 that performs the cellular communication is located near a cell edge, when control of increasing the transmission power in the cellular communication is performed, the cellular communication serves as a large interference source on the D2D communication.

When the interference occurs, the wireless communication performance is consequently likely to be reduced, for example, the system capacity of the wireless communication system 1 is reduced.

In this regard, in the present embodiment, even when the same radio resources (for example, frequency band) are shared by the D2D communication and the cellular communication, it is possible to prevent the interference between the D2D communication and the cellular communication, and thus the system capacity is increased.

For example, the DUE 20 that performs the D2D communication transmits (also referred to as "notifies" or "reports") information related to an interference source to the wireless base station 10. For example, the information related to the interference source may be information indicating an interference level in radio resources allocated to the UL cellular communication.

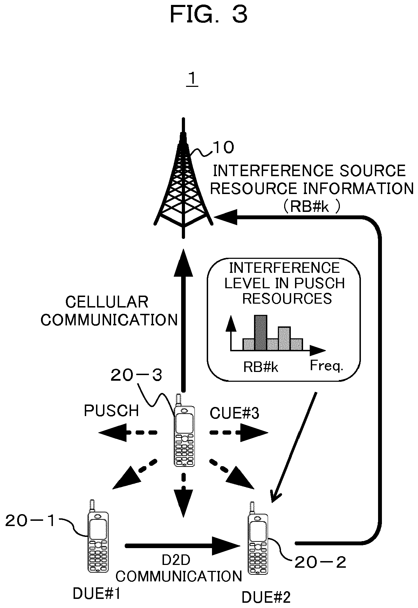

For example, as schematically illustrated in Fig. 3, the DUE 20 may receive a signal of the cellular communication, measure the interference level, and report information of radio resources having a relatively high interference level (hereinafter, also referred to as "interference source resource information") to the wireless base station 10.

The signal of the measurement target of the interference level in the DUE 20 may be, for example, a signal transmitted from the CUE 20 through a Physical Uplink Shared Channel (PUSCH) or a Sounding Reference Signal (SRS) transmitted from the CUE 20.

When the signal of the PUSCH is the measurement target, the interference source resource information may be information indicating radio resources (for example, a RB) allocated to the PUSCH. When the SRS is the measurement target, the interference resource information may be information indicating radio resources (for example, a sub-frame and a sub-band) used for SRS transmission.

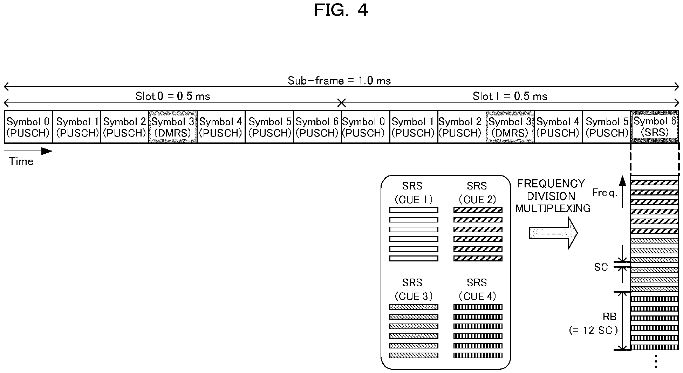

Fig. 4 illustrates an example of a sub-frame and a sub-band used for the SRS transmission. For example, the SRS may be transmitted with a cycle of one sub-frame (= 1.0 ms) as illustrated in Fig. 4. Two time slots (TS) of 0.5 ms may be multiplexed into one sub-frame in a time division manner. Seven symbols, that is, symbols 0 to 6 may be multiplexed into one TS in a time division manner. The symbol may be an Orthogonal Frequency-Division Multiplexing (OFDM) symbol.

The SRS may be transmitted through any one of TSs assigned in units of UEs 20 in a sub-frame assigned in units of cells. In other words, a transmission timing of the SRS may be specified by a parameter specific to a cell (a cell-specific parameter) and a parameter specific to a UE (a UE-specific parameter). The cell-specific parameter is an example of information that can be easily referred to by all the UEs 20 located within a cell.

For example, the SRS may be transmitted through frequency resources assigned to be specific to the UE 20 in a last symbol of one sub-frame assigned to the cell 100 (see Fig. 1). In other words, the SRSs addressed to a plurality of different CUEs 20 are multiplexed into the last symbol in a frequency division manner.

Fig. 4 illustrates an example in which the SRSs addressed to four CUEs 20 are multiplexed in a frequency division manner in units of RBs configured with 12 subcarriers in a comb form with intervals of one SCs. Thus, in the example of Fig. 4, the measurement target of the interference level is the last symbol of one sub-frame. The interference resource information may be a combination of information identifying a RB into which the SRSs are multiplexed (for example, a RB number) and information identifying a frequency division multiplexing pattern of a comb (for example, a comb number (a comb index)). The comb number may be considered as being an example of information identifying a sub-band into which the SRSs are multiplexed in a frequency division manner.

The wireless base station 10 specifies (also referred to as "identifies") a CUE 20 serving as an interference source for the DUE 20 (hereinafter, also referred to as an "interference source CUE") based on the interference source resource information received from the DUE 20. Since the wireless base station 10 has information about (manages) the CUE 20 being allocated with radio resources and the allocated radio resource (whether or not scheduling is performed), the wireless base station 10 can identify the interference source CUE 20 based on the interference source resource information.

When the interference source CUE 20 is specified, the wireless base station 10 reduces interference from the cellular communication to the D2D communication using a first interference prevention method or a second interference prevention method.

In the first interference prevention method, the wireless base station 10 controls an allocation of the radio resources (scheduling) such that the radio resources allocated to the DUE 20 are not allocated to the interference source CUE 20.

In the second interference prevention method, the wireless base station 10 transmits (also referred to as "gives a notification of") an identifier of the interference source CUE 20 to the transmission source DUE 20 of the interference source resource information. An example of the identifier of the interference source CUE 20 may be a Cell-Radio Network Temporary Identifier (C-RNTI). For example, the C-RNTI is used for encoding and decoding UL transmission permission information of the cellular communication. The UL transmission permission information of the cellular communication is also referred to as a "UL grant."

Thus, the DUE 20 that has received the C-RNTI of the interference source CUE 20 may try to decode the UL grant addressed to the interference source CUE 20 using the C-RNTI. When the UL grant is successfully decoded, the DUE 20 detects allocation information of the radio resources allocated from the wireless base station 10 to the interference source CUE 20 based on the UL grant.

When the allocation information of the radio resources is successfully detected, the DUE 20 does not perform (also referred to as "inhibits") the D2D communication using the radio resources allocated to the CUE 20. The DUE 20 may perform the D2D communication using radio resources different from the radio resources allocated to the CUE 20. Further, a PUSCH-based signal may be transmitted and received in data transmission (communication) of the D2D communication.

The UL grant is transmitted from the wireless base station 10 to the CUE 20, for example, through a downlink control channel (Physical Downlink Control Channel (PDCCH)). Control information indicating the "UL grant" may include, for example, information of the frequency resources to be used for transmission by the CUE 20 using an uplink shared channel (PUSCH) as downlink control information (DCI). In other words, the "UL grant" may include allocation information of UL radio resources for the CUE 20. A format of the control information indicating the "UL grant" is also referred to as "DCI format0" or "DCI format4."

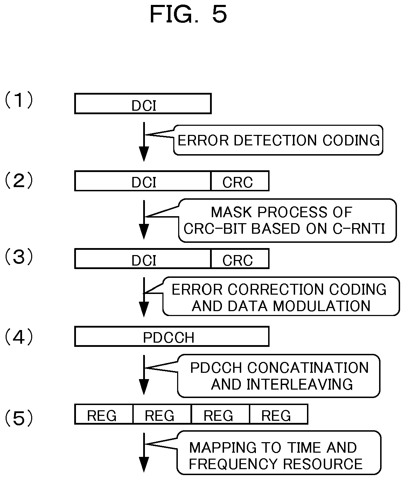

Fig. 5 illustrates an example of a process of generating a transmission signal of the PDCCH in the wireless base station 10. The wireless base station 10 performs error detection coding on the DCI and adds a Cyclic Redundancy Check (CRC) code (bit) to the DCI as illustrated in (1) to (2) of Fig. 5.

The CRC bit added to the DCI undergoes a mask process based on a bit expression of an identifier (C-RNTI) of the CUE 20 which is the destination of the PDCCH as illustrated in (2) to (3) of Fig. 5.

The C-RNTI is not a permanent identifier but an example of a temporary identifier allocated, for example, each time the CUE 20 transmits an access request to the wireless base station 10. For example, the C-RNTI may be allocated from the wireless base station 10 to the CUE 20 through a random access process when the CUE 20 performs random access to the wireless base station 10.

The DCI to which the CRC bit undergoing the mask process based on the C-RNTI is added undergoes error correction code and data modulation, and the transmission signal of the PDCCH is generated accordingly as illustrated (3) to (4) of Fig. 5.

The generated transmission signal of the PDCCH undergoes a concatenation with the transmission signal of the PDCCH addressed to another CUE 20, is interleaved, then mapped to the radio resources (REG) identified by the time and the frequency, and transmitted as illustrated (4) to (5) of Fig. 5.

When there is no notification indicating the radio resources for receiving the signal of the PDCCH from the wireless base station 10 from the wireless base station 10, the CUE 20 tries to decode the reception signal in a known search range (also referred to as "search space").

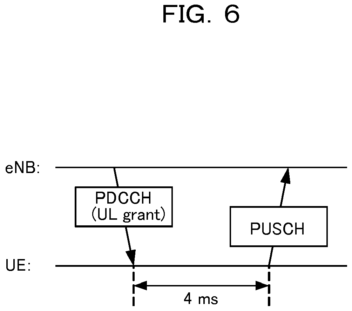

The CUE 20 removes the mask of the CRC bit using its own C-RNTI for the decoded result, and performs error detection. The decoded result having no error indicates the "UL grant." When the "UL grant" is successfully decoded, the CUE 20 transmits a signal of the PUSCH using the frequency resources indicated by the DCI after a certain period of time (for example, 4 ms) elapses after the "UL grant" is received, for example, as illustrated in Fig. 6.

As described above, the decoding process of the CUE 20 of the "UL grant" transmitted through the PDCCH includes a process of removing the mask of the CRC bit using the C-RNTI of the CUE 20. Thus, when the DUE 20 can acquire the C-RNTI of another CUE 20 that performs the cellular communication, the DUE 20 can decode the "UL grant" addressed to the CUE 20 by trying to decode the signal of the PDCCH addressed to the CUE 20 using the C-RNTI.

When the "UL grant" addressed to the CUE 20 is successfully decoded, the DUE 20 can detect the frequency resources allocated to the CUE 20. Thus, since the DUE 20 does not perform the D2D communication using the frequency resources allocated to the CUE 20, the interference between the D2D communication and the cellular communication can be prevented. The try to decode the signal (the UL grant) of the PDCCH transmitted to another CUE 20 through the DUE 20 is also referred to as "sniffering."

### (First interference prevention method)

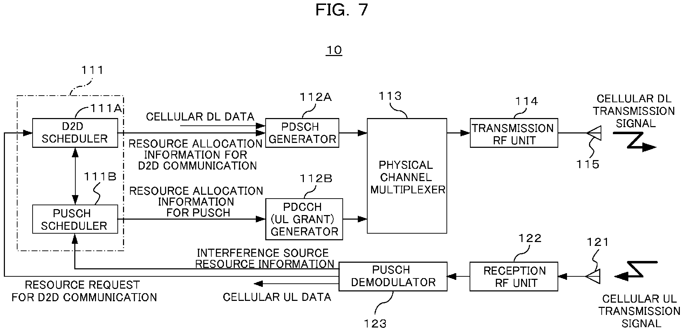

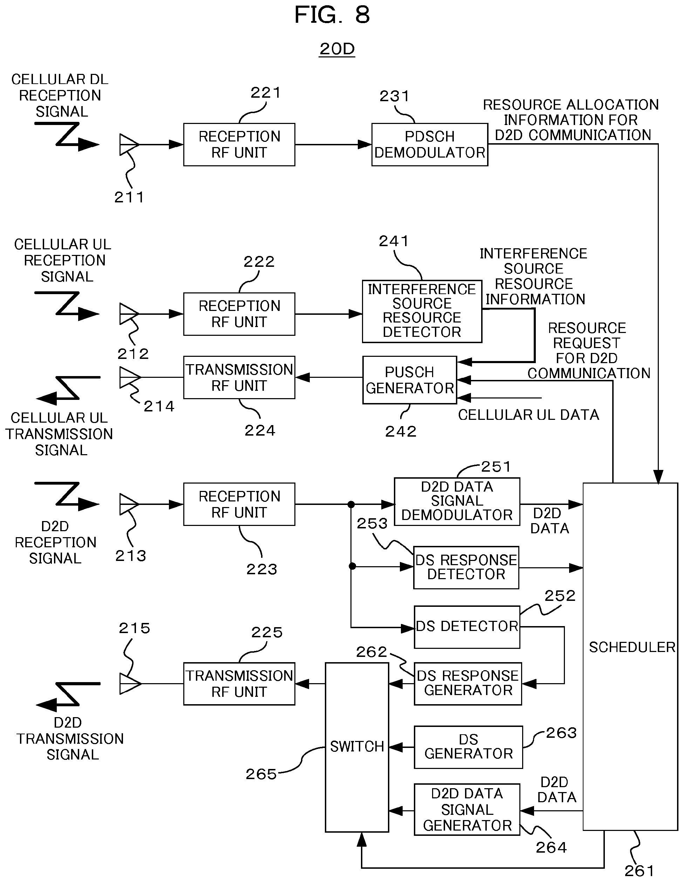

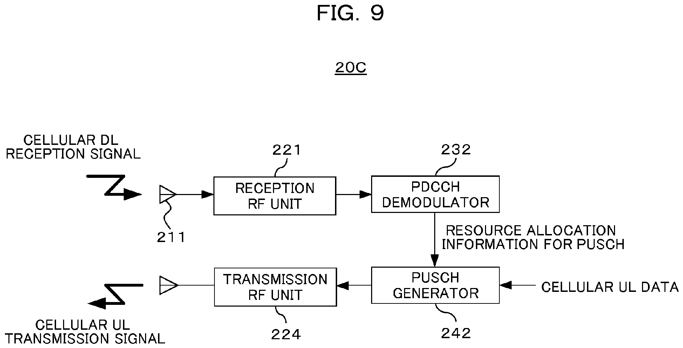

Next, exemplary configurations of the wireless base station 10, the DUE 20, and the CUE 20 for implementing the first interference prevention method will be described with reference to Figs. 7 to 9. Fig. 7 is a block diagram illustrating an exemplary configuration of the wireless base station 10, Fig. 8 is a block diagram illustrating an exemplary configuration of the DUE 20, and Fig. 9 is a block diagram illustrating an exemplary configuration of the CUE 20. Hereinafter, the DUE 20 is also referred to as a "DUE 20D" for the sake of convenience, and the CUE 20 is also referred to as a "CUE 20C" for the sake of convenience.

### (Exemplary configuration of wireless base station 10)

The wireless base station 10 includes, for example, a scheduler 111, a PDSCH generator 112A, a PDCCH (UL grant) generator 112B, a physical channel multiplexer 113, a transmission radio frequency (RF) unit 114, and a transmission antenna 115 as illustrated in Fig. 7.

The scheduler 111 may be considered as being an example of a controller that controls an operation of the wireless base station 10 in general or an example of a functional unit included in the controller. The PDSCH generator 112A, the UL grant generator 112B, the physical channel multiplexer 113, the transmission RF unit 114, and the transmission antenna 115 may be considered as being an example of a DL transmission system (a transmitter or a transmitting device) of the wireless base station 10.

The wireless base station 10 includes a reception antenna 121, a reception RF unit 122, and a PUSCH demodulator 123 as an example of a UL reception system (a receiver or a reception device) as illustrated in Fig. 7.

The scheduler 111 supports, for example, generation of allocation information of the radio resources for the D2D communication and allocation information of the radio resources for the PUSCH. The "allocation information of the radio resources" is also referred to simply as "resource allocation information."

To this end, the scheduler 111 includes, for example, a D2D scheduler 111A and a PUSCH scheduler 111B.

The D2D scheduler 111A internally sets, for example, the radio resources that are allowed to be used for the D2D communication. Upon receiving an allocation request for the radio resources for the D2D communication from any one UE 20, the D2D scheduler 111A generates the allocation information of the radio resources for the D2D communication.

For example, the PUSCH scheduler 111B controls (schedules) an allocation of the radio resources used for transmission of the PUSCH by the CUE 20 (hereinafter, also referred to as "PUSCH resources"). For example, upon receiving the PUSCH transmission permission request from any one of the UEs 20, the PUSCH scheduler 111B generates the allocation information of the PUSCH resources.

Upon receiving the interference source resource information from the PUSCH demodulator 123, the PUSCH scheduler 111B specifies (identifies) the interference source CUE 20 that are allocated with the PUSCH resources indicated by the interference source resource information received from the DUE 20 with reference to an allocation history of the PUSCH resources. The allocation history of the PUSCH resources is also referred to as a "PUSCH scheduling history." The "PUSCH scheduling history" may be stored in, for example, a memory (not illustrated) with which the PUSCH scheduler 111B is equipped.

When the interference source CUE 20 is specified, the PUSCH scheduler 111B allocates, for example, the radio resources allocated to the transmission source DUE 20 of the interference source resource information to the interference source CUE 20, and excludes the radio resources from possible candidate PUSCH resources. In other words, the PUSCH scheduler 111B prohibits an overlapping allocation of the radio resources allocated to the transmission source DUE 20 of the interference source resource information and the PUSCH resources allocated to the interference source CUE 20. An example of the exclusion (the prohibition) will be described later.

The PDSCH generator 112A generates a signal (a PDSCH signal) that is DL-transmitted through the PDSCH. The PDSCH signal is generated, for example, based on a DL data signal addressed to the CUE 20 which is received from the core network. The data signal is also referred to as "user data" or a "user (U) plane signal."

The PDCCH generator 112B generates the PDCCH signal addressed to the CUE 20. The PDCCH signal may include the DCI (the UL grant) as illustrated in Fig. 5.

The physical channel multiplexer 113 multiplexes the PDSCH signal and the PDCCH signal generated by the PDSCH generator 112A and the PDCCH generator 112B, and outputs a resulting signal to the transmission RF unit 114.

The transmission RF unit 114 converts (for examples, up-converts) the transmission signal of the physical channel multiplexed by the physical channel multiplexer 113 into a RF signal (a radio wave), and outputs the RF signal to the transmission antenna 115 according to specified transmission power.

The transmission antenna 115 radiates the RF signal output from the transmission RF unit 114 into space.

The reception antenna 121 receives a radio wave (that is, a UL RF signal) radiated into space by any one UE 20 and outputs the radio wave to the reception RF unit 122.

The reception RF unit 122 converts (for example, down-converts) the UL RF signal received by the reception antenna 121 into, for example, a baseband frequency signal (hereinafter, also referred to as a "BB signal"), and outputs the BB signal to the PUSCH demodulator 123.

The PUSCH demodulator 123 performs a demodulation process on the BB signal output from the reception RF unit 122, and obtains, for example, the PUSCH signal. The PUSCH signal may include, for example, user data to be transmitted to the core network. The PUSCH signal may include a resource allocation request for the D2D communication. The demodulated resource allocation request is transferred to, for example, the D2D scheduler 111A.

The PUSCH signal may further include the interference source resource information. The interference source resource information may be transferred to, for example, the scheduler 111 (for example, the D2D scheduler 111B). Thus, the reception RF unit 122 and the PUSCH demodulator 123 may be considered as being an example of a receiver that receives the interference source resource information from the DUE 20 that performs the D2D communication.

The transmission antenna 115 and the reception antenna 121 may be configured as a transceiving antenna shared by the DL and the UL, for example, using an antenna duplexer. In this case, the transmission RF unit 114 and the reception RF unit 122 may be shared (or integrated) in a single RF transceiver.

All or some of the respective units 111, 112A, 112B, 113, 114, 122, and 123 may be implemented by an operation device with an operation capability such as a CPU, an MPU, or an FPGA. The operation device is also referred to as a "hardware processor" or a "processor device."

### (Exemplary configuration of DUE 20D)

The DUE 20D illustrated in Fig. 8 supports the cellular communication and the D2D communication and corresponds, for example, the DUE 20-1 or 20-2 of Fig. 3. The DUE 20D includes reception antennas 211 to 213, transmission antennas 214 and 215, reception RF units 221 to 223, and transmission RF units 224 and 225 as illustrated in Fig. 8. The DUE 20D of Fig. 8 includes, for example, a PDSCH demodulator 231, an interference source resource detector 241, and a PUSCH generator 242.

The DUE 20D of Fig. 8 further includes, for example, a D2D data signal demodulator 251, a DS detector 252, a DS response detector 253, a scheduler 261, a DS response generator 262, a DS generator 263, a D2D data signal generator 264, and a switch 265.

The "DS" stands for a "discovery signal." The DS is an example of a signal transmitted for searching for (discovering) the DUE 20 that performs the D2D communication. For example, the DS may be generated based on an identifier common to the CUEs 20 (a cell-specific ID) and transmitted using radio resources common to the CUEs 20.

The DS may include a correlation detection signal with a signal known between the DUEs 20 (also referred to as a "sequence") as an example of a signal used for establishing a radio link of the D2D communication. The DS may include a signal for transmitting control information (also referred to as a "message") as an example of information attached to the sequence.

For example, a format such as a Physical Random Access Channel (PRACH) and a Sounding Reference Signal (SRS) may be used as a format of the "sequence." For example, a format of the PUSCH may be used as a format of the "message." For example, control information transmitted using the "message" may be an information amount of about 100 bits. The "sequence" and the "message" may be transmitted through different physical channels.

The reception antenna 211 receives the DL RF signal in the cellular communication, and outputs the DL RF signal to the reception RF unit 221.

The reception RF unit 221 down-converts the DL RF signal received by the reception antenna 211 into, for example, the BB signal, and outputs the BB signal to the PDSCH demodulator 231.

The PDSCH demodulator 231 demodulates the PDSCH signal by performing the demodulation process on the BB signal output from the reception RF unit 221. When the demodulated PDSCH signal indicates the resource allocation information for the D2D communication, the resource allocation information is transferred to the scheduler 261. Further, when the resource allocation information for the D2D communication is the allocation information of the frequency resources, the allocation information is also referred to as "D2D carrier information."

The reception antenna 212 receives the UL RF signal in the cellular communication, and outputs the UL RF signal to the reception RF unit 222.

The reception RF unit 222 down-converts the UL RF signal received by the reception antenna 221 into, for example, the BB signal, and outputs the BB signal to the interference source resource detector 241. The reception RF unit 222 may be considered as being an example of a first receiver that receives a signal transmitted from the CUE 20 that performs the cellular communication with the wireless base station 10.

The interference source resource detector 241 measures the interference level of the BB signal input from the reception RF unit 222, detects radio resources having a relatively high interference level, and generates the interference source resource information identifying the detected radio resources. The interference source resource information may be transferred to, for example, the PUSCH generator 242.

For example, the interference source resource detector 241 may measure the interference level of the reception signal of the UL cellular communication for every frequency resources allocated to the PUSCH. The interference level may be measured as interference power ("cellular interference power") or may be measured as an index indicating a reception signal quality of the data signal of the D2D communication. As a non-limiting example of the index of the reception signal quality, there are a Signal to Interference plus Noise Ratio (SINR), a Signal to Interference Ratio (SIR), a Signal to Noise Ratio (SNR), a Receive Signal Strength Indication (RSSI), and a bit error rate (BER).

When the cellular interference power is measured, the frequency resources whose cellular interference power is a predetermined power threshold value or higher may be detected as the interference source resources. The SINR may be obtained by dividing reception power of the D2D data signal in the D2D communication by the cellular interference power. The frequency resources whose SINR is a predetermined threshold value or lower may be detected as the interference source resources.

The detected interference source resources may correspond to one sub-frame or one or more RBs or may correspond to a plurality of sub-frames or one or more RBs. Thus, the interference source resource information may be indicated as a RB number or a combination of a sub-frame number and a RB number. Alternatively, the interference source resource information may be information that allows the RB number corresponding to the interference source resources to be indicated in a bitmap format.

The reception antenna 213 receives the RF signal transmitted from another DUE 20D in the D2D communication, and outputs the RF signal to the reception RF unit 223.

The reception RF unit 223 down-converts the reception RF signal of the D2D communication received by the reception antenna 213 into, for example, the BB signal, and outputs the BB signal to the D2D data signal demodulator 251, the DS detector 252, and the DS response detector 253.

The D2D data signal demodulator 251 demodulates the BB signal input from the reception RF unit 223, and obtains a data signal of the D2D communication. When the D2D communication is performed using the PUSCH as described above, the D2D data signal demodulator 251 may be the PUSCH demodulator 251 that demodulates the PUSCH signal.

The DS detector 252 detects the DS from the BB signal input from the reception RF unit 223. For example, the DS corresponds to the DS that is generated by the DS generator 263 in another DUE 20D and transmitted in order to search for the DUE 20D establishing a pair of the D2D communication. In response to the detection of the DS by the DS detector 252, the DS response generator 262 generates a DS response signal.

The DS response detector 253 detects the DS response signal to the DS that is generated by the DS generator 263 and transmitted to another DUE 20 from the signal received by the reception RF unit 223. A notification indicating that the DS response signal is detected is given to, for example, the scheduler 261. In response to the detection of the DS response signal, a pair of the D2D communication with another DUE 20 is established.

The scheduler 261 is an example of a controller that controls the cellular communication and the D2D communication. For example, the scheduler 261 transmits the resource allocation request for the D2D communication to the PUSCH generator 242. The PUSCH generator 242 generates the PUSCH signal addressed to the wireless base station 10 including the resource allocation request in response to the reception of the resource allocation request.

Further, when the PDSCH demodulator 231 demodulates the resource allocation information serving as the response to the resource allocation request for the D2D communication, the scheduler 261 receives the resource allocation information from the PDSCH demodulator 231. The scheduler 261 controls the D2D data signal demodulator 251 and the D2D data signal generator 264 such that the D2D communication is performed using the frequency resources indicated by the resource allocation information.

The PUSCH generator 242 generates the PUSCH signal including the UL data signal in the cellular communication, and outputs the PUSCH signal to the transmission RF unit 224. The resource allocation request for the D2D communication received from the scheduler 261 may be transmitted through the PUSCH signal. The PUSCH generator 242 generates the PUSCH signal including the interference source resource information detected by the interference source resource detector 241, and outputs the PUSCH signal to the transmission RF unit 224.

The transmission RF unit 224 converts (up-converts) the PUSCH signal of the baseband frequency generated by the PUSCH generator 242 into the RF signal, and outputs the RF signal to the transmission antenna 214. The PUSCH generator 242 and the transmission RF unit 224 may be considered as being an example of a transmitter that transmits the interference source resource information detected by the interference source resource detector 241 to the wireless base station 10.

The transmission antenna 214 radiates the RF signal output from the transmission RF unit 224 into space.

The DS generator 263 generates the DS for searching for another DUE 20D establishing a pair of the D2D communication. The DS is detected by the DS detector 252 of another DUE 20D.

The D2D data signal generator 264 generates, for example, a transmission data signal of the D2D communication including the data signal received from the scheduler 261. When the D2D communication is performed using the PUSCH as described above, the D2D data signal generator 251 may be the PUSCH generator 251 that generates the PUSCH signal.

The switch 265 selectively output the outputs of the DS response generator 262, the DS generator 263 and the D2D data signal generator 264 to the transmission RF unit 225, for example, according to control by the scheduler 261. The D2D communication (transmission) is controlled by switching and controlling the switch 265 through the scheduler 261.

The transmission RF unit 225 converts (up-converts) the BB signal serving as the output signal of the switch 265 into the RF signal and outputs the RF signal to the transmission antenna 215.

The transmission antenna 215 radiates the RF signal output from the transmission RF unit 225 into space.

Either or both of the DL reception antenna 211 and the UL reception antenna 212 for the cellular communication and the reception antenna 213 for the D2D communication may be integrated into a single reception antenna. Similarly, either or both of the DL reception RF unit 221 and the UL reception RF unit 222 for the cellular communication and the reception RF unit 223 for the D2D communication may be integrated into a single RF receiver.

The UL transmission antenna 214 for the cellular communication and the transmission antenna 215 for the D2D communication may be integrated into a single transmission antenna. Similarly, the UL transmission RF unit 224 for the cellular communication and the transmission RF unit 225 for the D2D communication may be integrated into a single RF transmitter.

Some or all of the reception antennas 211 to 213 and the transmission antennas 214 and 215 may be integrated into a single transceiver antenna. Similarly, some or all of the reception RF units 221 to 223 and the transmission RF units 224 and 225 may be integrated into a single RF transceiver.

All or some of the respective units 221 to 225, 231, 241, 242, 251 to 253, and 261 to 265 are also referred to as a hardware processor with an operation capability such as a CPU, an MPU, or an FPGA.

### (Exemplary configuration of CUE 20C)

Fig. 9 is a block diagram illustrating an exemplary configuration of the CUE 20C that supports the cellular communication. The CUE 20C illustrated in Fig. 9 corresponds, for example, the CUE 20-3 of Fig. 3 and is an example of a UE functioning as the interference source for the D2D communication between the CUEs 20-1 and 20-2.

The CUE 20C illustrated in Fig. 9 includes, for example, a reception antenna 211, a reception RF unit 221, a PDCCH demodulator 232, and a PDSCH demodulator 231. The CUE 20C illustrated in Fig. 9 includes, for example, a transmission antenna 214, a transmission RF unit 224, and a PUSCH generator 242.

The reception antenna 211 and the reception RF unit 221 have functions that are identical or similar to the reception antenna 211 and the reception RF unit 221 of the DUE 20D illustrated in Fig. 8.

The PDCCH demodulator 232 demodulates the PDCCH signal by performing the demodulation process the BB signal output from the reception RF unit 221. The demodulation process includes a decoding process such as error correction decoding. When the demodulated PDCCH signal indicates the resource allocation information for the PUSCH in the cellular communication, the resource allocation information is transferred to the PUSCH generator 242.

The PUSCH generator 242 generates the PUSCH signal to be transmitted using the PUSCH resources indicated by the resource allocation information for the PUSCH. The PUSCH signal includes, for example, the UL data signal in the cellular communication.

The transmission RF unit 224 converts (up-converts) the PUSCH signal generated by the PUSCH generator 242 into the RF signal, and outputs the RF signal to the transmission antenna 214.

The transmission antenna 214 radiates the RF signal output from the transmission RF unit 224 into space.

The reception antenna 211 and the transmission antenna 214 may be integrated into a single transceiver antenna. Similarly, the reception RF unit 221 and the transmission RF unit 224 may be integrated into a single RF transceiver. All or some of the respective units 221, 224, 232, and 242 may be implemented by a hardware processor with an operation capability such as a CPU, an MPU, or an FPGA.

### (Exemplary operation)

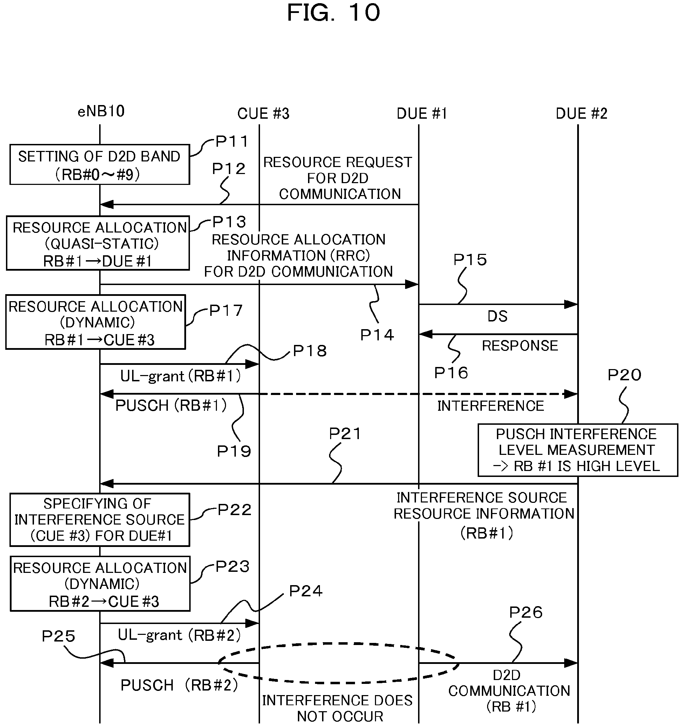

Next, an example of a method of preventing interference between cellular communication and the D2D communication in the wireless communication system 1 having the above-described configuration will be described with reference to a sequence diagram illustrated in Fig. 10.

The wireless base station 10 performs a setting of the frequency resources for the D2D communication in advance (process P11). The setting may be performed by the scheduler 111 (the D2D scheduler 111A) illustrated in Fig. 7.

Fig. 10 illustrates an example in which 10 RBs #0 to #9 are set as the frequency resources available for the D2D communication as a non-limiting example. The frequency resources for the D2D communication are also referred to simply as "D2D resources."

After the setting of the D2D resources is completed, for example, the DUE #1 transmits the D2D resource allocation request to the wireless base station 10 (process P12). For example, the D2D resource allocation request is transmitted from the transmission antenna 214 through the PUSCH via the scheduler 261 and the PUSCH generator 242 illustrated in Fig. 8.

The wireless base station 10 receives and demodulates the D2D resource allocation request transmitted from the DUE #1 through the PUSCH demodulator 123 and transfers the demodulated D2D resource allocation request to the D2D scheduler 111A. The D2D scheduler 111A determines to allocate any one (for example, the RB #1) of the RBs #0 to #9 set as the D2D communication resources to the DUE #1 in response to the reception of the D2D resource allocation request (process P13).

The allocation of the D2D resources may be dynamic or may be "quasi-static" in order to suppress a communication amount between the wireless base station 10 and the DUE 20 as much as possible. The "quasi-static" may be non-static (unfixed) but may be considered as indicating that a change is not made as often as "dynamic."

As the allocation of the RB #1 is determined, the wireless base station 10 transmits the resource allocation information of the RB #1 to, for example, the DUE #1 through the PDSCH (process P14). The PDSCH signal including the resource allocation information is generated by, for example, the PDSCH generator 112A illustrated in Fig. 7. The transmission of the resource allocation information by the PDSCH signal may be considered as being an example of radio resource control (RRC).

After receiving the resource allocation information of the D2D resources (the RB #1), the DUE #1 generates the DS through the DS generator 263 (see Fig. 8), and transmits the DS (process P15). In the example of Fig. 10, the DS is received by the DUE #2.

Upon detecting the DS through the DS detector 252 (see Fig. 8), the DUE #2 generates the DS response signal through the DS response generator 262, and transmits the DS response signal to the DUE #1 (process P16). Upon detecting the reception of the DS response signal through the DS response detector 253, the DUE #1 establishes a pair of the D2D communication with the transmission source DUE #2 of the DS response signal.

Meanwhile, the CUE #3 that performs the cellular communication with the wireless base station 10 transmits a transmission request for the UL grant to the wireless base station 10. Upon receiving the transmission request for the UL grant from the CUE #3, the wireless base station 10 determines an allocation of the frequency resources that are allowed to be used for the UL transmission by the CUE #3 through the PUSCH scheduler 111B (see Fig. 7) (process P17). In the example of Fig. 10, the RB #1 is allocated to the CUE #3.

When the RB #1 is determined as the frequency resources to be allocated to the CUE #3, the wireless base station 10 generates the UL grant including the resource allocation information indicating the RB #1 through the UL grant generator 112B (see Fig. 7) and transmits the UL grant to the CUE #3 through, for example, the PDCCH (process P18).

When the UL grant is successfully received, demodulated, and decoded through the PDCCH demodulator 232 (see Fig. 9), after 4ms as illustrated in Fig. 6, the CUE #3 performs the UL transmission (transmission of the PUSCH signal) using the RB #1 indicated by the UL grant (process P19).

Here, the PUSCH signal transmitted from the CUE #3 may interfere with the D2D communication between the DUE #1 and the DUE #2. For example, the DUE #2 measures the interference level of the PUSCH signal transmitted from the CUE #3 for the D2D communication, and detects the interference source resources having the relatively high interference level through the interference source resource detector 241 (see Fig. 8) (process P20).

In the example of Fig. 10, since the RB #1 is detected as the interference source resources, the DUE #2 reports the interference source resource information indicating the RB #1 to the wireless base station 10, for example, through the PUSCH (process P21). The PUSCH signal including the interference source resource information is generated through the PUSCH generator 242 illustrated in Fig. 8.

When the interference source resource information (the RB #1) is received and demodulated through the PUSCH demodulator 123 illustrated in Fig. 7, the wireless base station 10 transfers the interference source resource information to the scheduler 111 (the PUSCH scheduler 111B). The PUSCH scheduler 111B specifies the CUE #3 that is allocated with the RB #1 indicated by the interference source resource information with reference to the allocation history of the PUSCH resources (process P22). The CUE #3 is the interference source CUE #3 for the D2D communication between the DUE #1 and the DUE #2.

When the interference source CUE #3 is specified, the PUSCH scheduler 111B selects the PUSCH resources (for example, the RB #2) not overlapping the RB #1 allocated for the D2D communication in process P13, and allocates the selected PUSCH resources (for example, the RB #2) to the CUE #3 (process P23).

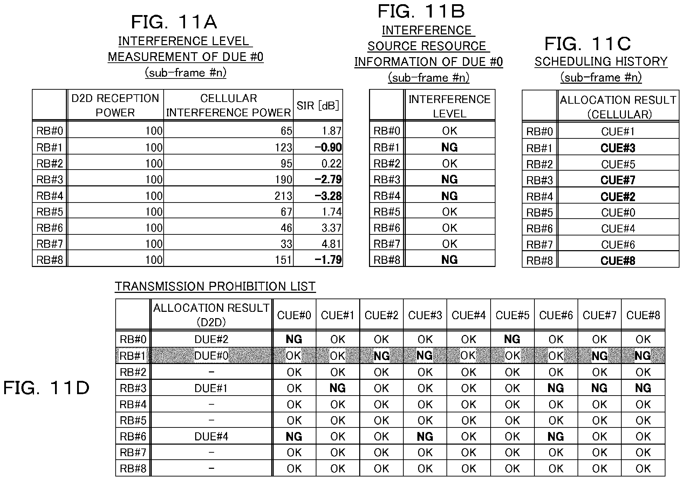

Here, an example of the flow of the interference level measurement and the scheduling will be described with reference to Figs. 11A to 11D. Figs. 11A to 11D illustrate an example in which the DUE 20 that performs the interference level measurement is the DUE #0, and scheduling of the PUSCH resources (the RBs #0 to #8) is performed for nine CUEs #0 to #8. The RBs #0 to #8 are an example of the radio resources shared by the cellular communication and the D2D communication.

The DUE #0 (corresponding to the DUE #2 of Fig. 10) measures the interference level (for example, the SIR) of a sub-frame number #n (n is an integer of 1 or larger) through the interference source resource detector 241 (see Fig. 8) as illustrated in Fig. 11A.

Based on a measurement result, the interference source resource detector 241 detects a RB whose SIR is a threshold value (for example, 0 dB) or less as the interference source resources as illustrated in Fig. 11B. In the example of Fig. 11B, the RB #1, the RB #3, the RB #4, and the RB #8 are detected as the interference source resources whose SIR is a threshold value or less (NG).

Thus, the DUE #0 reports the interference source resource information indicating the RB #1, the RB #3, the RB #4, and the RB #8 to the wireless base station 10.

Upon receiving the interference source resource information, the wireless base station 10 specifies the interference source CUE 20 for the DUE #0 based on a scheduling history of the sub-frame #n as illustrated in Fig. 11C through the PUSCH scheduler 111B. In the example of Fig. 11C, the CUE #3 that is allocated with the RB #1, the CUE #7 that is allocated with the RB #3, the CUE #2 that is allocated with the RB #4, and the CUE #8 that is allocated with the RB #8 are specified as the interference source CUE 20 for the DUE #0.

The PUSCH scheduler 111B stores data indicating a CUE 20 to which a RB is allocated and the allocated RB (that is, a CUE 20 and a RB that are in an allocation prohibition relation) in a memory (not illustrated) as illustrated in Fig. 11D. The data may be stored in the memory as data of a table form (also referred to as a "list form"), and such data is also referred to a "transmission permission list" or a "transmission prohibition list."

The PUSCH scheduler 111B updates the transmission prohibition list so that the RB allocated to the D2D communication is not allocated to the interference source CUE 20 specified based on the scheduling history as described above. For example, in the transmission prohibition list of Fig. 11D, in the case of the RB #1 allocated to the DUE #0 indicated by an "allocation result" of the D2D communication, the CUEs #2,#3,#7, and #8 among the CUE s#0 to #8 are prohibited (NG) from performing the PUSCH transmission using the RB #1. The other CUEs #0, #1, and #4 to #6 are allowed (OK) to perform the PUSCH transmission using the RB #1.

Thus, in scheduling of a certain RB #j, the PUSCH scheduler 111B excludes the CUE 20 indicated by "NG" in the transmission prohibition list from a scheduling candidate of the RB #j. j is an integer of 0 or larger, and, for example, j is any one of 0 to 8.

Accordingly, the wireless base station 10 (the PUSCH scheduler 111B) can select the RB not overlapping with the RB allocated to the D2D communication, and allocate the selected RB to the CUE 20.

Returning to the description of Fig. 10, when the RB #2 is determined to be allocated to the CUE #3 in process P23, the wireless base station 10 generates the UL grant including the resource allocation information indicating the RB #2, and transmits the UL grant to the CUE #3 through the PDCCH (process P24).

When the UL grant is successfully received, demodulated, and decoded by the PDCCH demodulator 232 (see Fig. 9), the CUE #3 performs the UL transmission (the transmission of the PUSCH signal) using the RB #2 indicated by the UL grant after 4 ms as illustrated in Fig. 6 (process P25).

At this time, for example, although the DUE #1 transmits the D2D data signal to the DUE #2 using the PUSCH resources (the RB #1) allocated for the D2D communication (process P26), since the RBs are different, no interference occurs.

In the above example, the DUE #2 performs the interference level measurement, and reports the interference source resource information, but the other DUE #1 establishing a pair of the D2D communication with the DUE #2 may perform the interference level measurement and report the interference source resource information. The same applies to the DUE 20 establishing a pair of other D2D communication.

Accordingly, the interference between the cellular communication and the D2D can be prevented. Thus, the DUE 20 (for example, the DUE #2) at the reception side of the D2D communication can receive a data signal of a sufficient quality from the DUE 20 (for example, the DUE #1) at the transmission side through the D2D communication regardless whether or not the interference component of the cellular communication is included.

Further, since the DUE 20 at the transmission side of the D2D communication does not perform transmission using the frequency resources that are unlikely to be properly received by the DUE 20 at the reception side although it performs the data transmission, it is possible to prevent interference with surrounding communication caused by unnecessary data transmission. In other words, the DUE 20 at the transmission side can be prevented from functioning as the interference source of other communication. For example, "other communication" is the cellular communication or another D2D communication of the CUE 20 located near the DUE 20 at the transmission side.

### (Second embodiment)

In a second embodiment, the second interference prevention method will be described. In the first embodiment, in the wireless communication system 1, the wireless base station 10 that receives the report of the interference source resources from the DUE 20 controls the allocation of the radio resources to the interference source CUE 20.

On the other hand, in the second embodiment (the second interference prevention method), in the wireless communication system 1, the wireless base station 10 transmits (also referred to as "gives a notification of") the identifier of the interference source CUE 20 (for example, the C-RNTI) to the DUE 20.

The DUE 20 tries to decode the UL grant addressed to the interference source CUE 20 using the C-RNTI reported from the wireless base station 10, and does not perform the D2D communication using the frequency resources corresponding to the resource allocation information indicated by the UL grant.

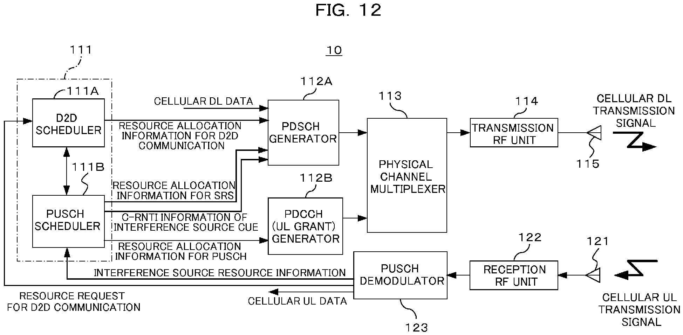

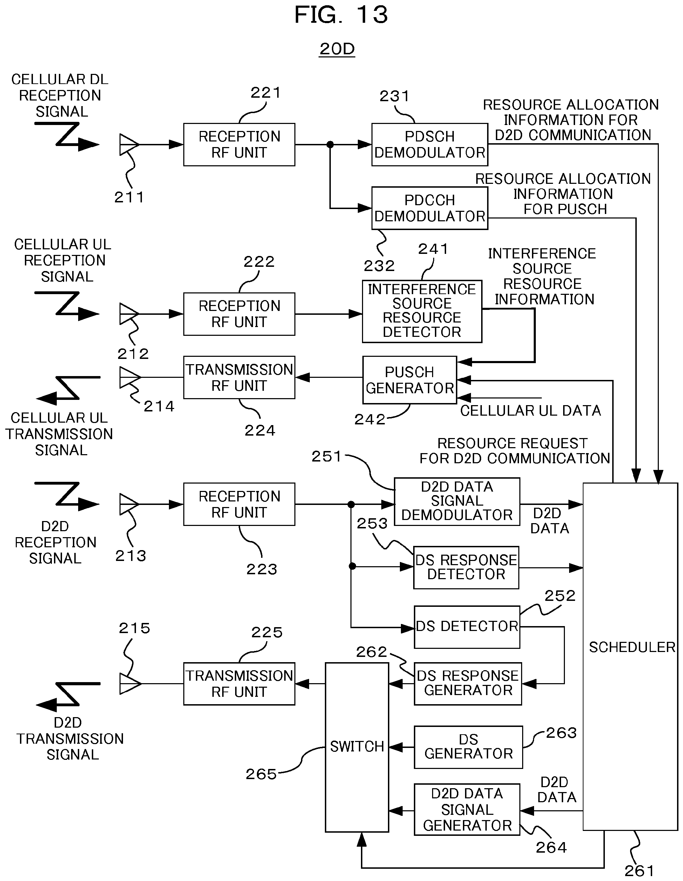

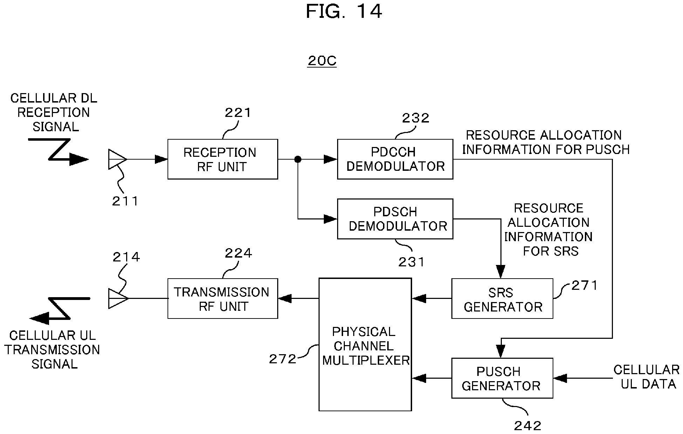

An exemplary configuration of the wireless communication system 1 (the wireless base station 10, the DUE 20 and the CUE 20) for implementing the second interference prevention method will be described below with reference to Figs. 12 to 14. Fig. 12 is a block diagram illustrating an exemplary configuration of the wireless base station 10, Fig. 13 is a block diagram illustrating an exemplary configuration of the DUE 20 (20D), and Fig. 14 is a block diagram illustrating an exemplary configuration of the CUE 20 (20C).

### (Exemplary configuration of wireless base station 10)

The wireless base station 10 illustrated in Fig. 12 includes a scheduler 111, a PDSCH generator 112A, a PDCCH (UL grant) generator 112B, a physical channel multiplexer 113, a transmission RF unit 114, and a transmission antenna 115, similarly to the configuration illustrated in Fig. 7.

The configuration illustrated in Fig. 12 differs from the configuration illustrated in Fig. 7 in that the PUSCH scheduler 111B can transfer the resource allocation information for the SRS to the CUE 20 and the C-RNTI of the interference source CUE 20 to the PDSCH generator 112A.

The PUSCH scheduler 111B allocates the radio resources used for the SRS transmission by the CUE 20 (hereinafter, also referred to as "SRS resources") to the CUE 20. Upon receiving interference source resource information transmitted from the DUE 20 through the PUSCH demodulator 123, the PUSCH scheduler 111B specifies the CUE 20 that is allocated with the SRS resources indicated by the interference source resource information with reference to an allocation history of the SRS resources. This CUE 20 is also referred to as an "interference source CUE 20."

The allocation history of the SRS resources is also referred to as an "SRS scheduling history". The "SRS scheduling history" is stored in, for example, a memory (not illustrated) with which the PUSCH scheduler 111B is equipped.

When the interference source CUE 20 is specified (identified), the PUSCH scheduler 111B transmits the identifier of the interference source CUE 20 (for example, the C-RNTI) to the transmission source DUE 20 of the interference source resource information through the PDSCH via the PDSCH generator 112A.

Thus, the PDSCH generator 112A of Fig. 12 differs from the PDSCH generator 112A of Fig. 7 in that the PDSCH signal including the resource allocation information for the SRS and the PDSCH signal including the C-RNTI of the interference source CUE 20 can be generated.

In other words, the configuration of the wireless base station 10 illustrated in Fig. 12 differs from the configuration illustrated in Fig. 7 in that the allocation information of the SRS resources addressed to the CUE 20 and the C-RNTI of the interference source CUE 20 addressed to the DUE 20 can be transmitted through the PDSCH.

For this reason, the PDSCH generator 112A, the physical channel multiplexer 113, and the transmission RF unit 114 of Fig. 12 may be considered as being an example of a transmitter that transmits the allocation information of the SRS resources and the C-RNTI of the interference source CUE 20 to the DUE 20.

The remaining components and function may be identical or similar to those of the configuration illustrated in Fig. 7.

### (Exemplary configuration of DUE 20D)

The DUE 20D illustrated in Fig. 13 differs from the configuration illustrated in Fig. 8 in that a PDCCH demodulator 232 is additionally provided. Further, a difference with the PDSCH demodulator 231 illustrated in Fig. 8 lies in that the PDSCH demodulator 231 can demodulate and decode the C-RNTI of the interference source CUE 20 transmitted from the wireless base station 10 through the PDSCH.

The reception RF unit 221 and the PDSCH demodulator 231 of Fig. 13 may be considered as being an example of a second receiver that receives the identification information of the interference source CUE 20 from the wireless base station 10. The C-RNTI obtained through the PDSCH demodulator 231 is transferred to the PDCCH demodulator 232.

The PDCCH demodulator 232 can demodulate and decode the PDCCH signal including the UL grant transmitted from the wireless base station 10 to the interference source CUE 20 using the C-RNTI transferred from the PDSCH demodulator 231. When the UL grant is successfully demodulated and decoded, the resource allocation information of the interference source CUE 20 indicated by the UL grant is transferred to the scheduler 261.

The scheduler 261 controls the D2D data signal demodulator 251 and the D2D data signal generator 264 such that the D2D communication is inhibited from being performed using the frequency resources indicated by the resource allocation information of the interference source CUE 20 received from the PDCCH demodulator 232.

The remaining components and function may be identical or similar to those of the configuration illustrated in Fig. 8.

### (Exemplary configuration of CUE 20C)

The CUE 20C illustrated in Fig. 14 differs from the configuration illustrated in Fig. 9 in that a PDSCH demodulator 231, an SRS generator 271, and a physical channel multiplexer 272 are additionally provided.

The PDSCH demodulator 231 demodulates the PDSCH signal transmitted from the wireless base station 10 by performing the demodulation process on the BB signal output from the reception RF unit 221. When the demodulated PDSCH signal indicates the resource allocation information for the SRS, the resource allocation information is transferred to the SRS generator 271.

The SRS generator 271 generates an SRS to be transmitted using the frequency resources indicated by the resource allocation information for the SRS.

The physical channel multiplexer 272 multiplexes the SRS generated by the SRS generator and the PUSCH signal generated by the PUSCH generator, and outputs a resulting signal to the transmission RF unit 224. In the multiplexing, the SRS is multiplexed in the comb form in the last symbol of the sub-frame in the frequency division manner and then transmitted, for example, as illustrated in Fig. 4.

The remaining components and function may be identical or similar to those of the configuration illustrated in Fig. 9.

### (Exemplary operation)

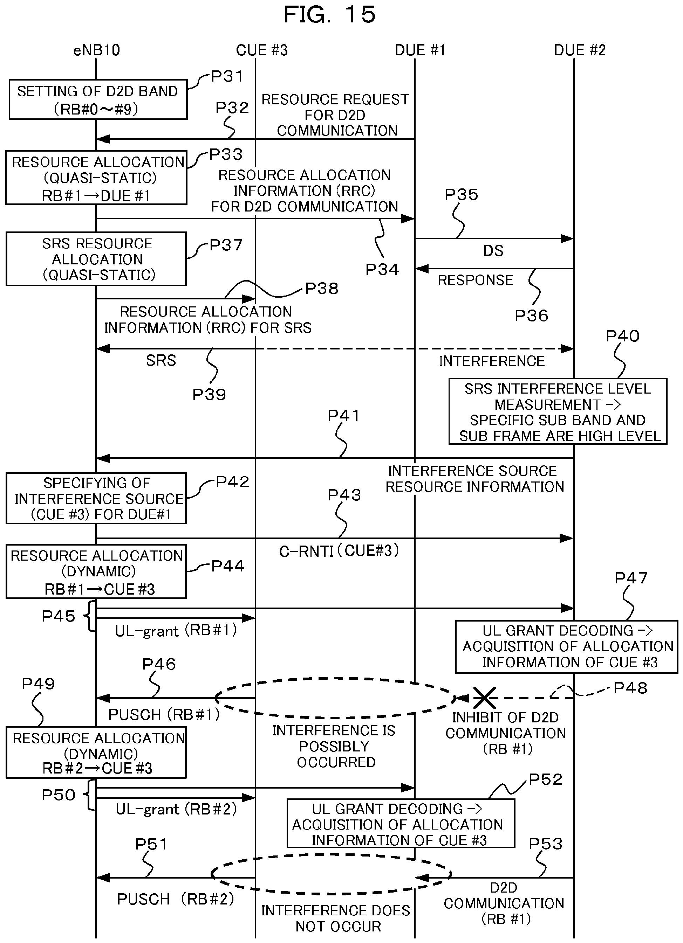

Next, an example of a method of preventing interference between cellular communication and the D2D communication in the wireless communication system 1 of the second embodiment having the above-described configuration will be described with reference to a sequence diagram illustrated in Fig. 15.

As illustrated in Fig. 15, the wireless base station 10 performs a setting of the frequency resources for the D2D communication (the D2D resources) in advance through the D2D scheduler 111A (process P31). Fig. 15 illustrates an example in which 10 RBs #0 to #9 are set as the D2D resources as a non-limiting example.

After the setting of the D2D resources, for example, the DUE #1 is assumed to transmit the D2D resource allocation request to the wireless base station 10 (process P32). For example, the D2D resource allocation request is transmitted from the transmission antenna 214 using the PUSCH through the scheduler 261 and the PUSCH generator 242 illustrated in Fig. 13.

The wireless base station 10 receives and demodulates the D2D resource allocation request transmitted from the DUE #1 through the PUSCH demodulator 123 and transfers the demodulated D2D resource allocation request to the D2D scheduler 111A. The D2D scheduler 111A determines to allocate any one (for example, the RB #1) of the RBs #0 to #9 set as the D2D communication resources to the DUE #1 in response to the reception of the D2D resource allocation request (process P33). The allocation of the D2D resources may be dynamic, similarly to the first embodiment but may be "quasi-static" in order to suppress a communication amount between the wireless base station 10 and the DUE 20 as much as possible.

As the allocation of the RB #1 is determined, the wireless base station 10 transmits the resource allocation information of the RB #1 to, for example, the DUE #1 through the PDSCH (process P34). The PDSCH signal including the resource allocation information is generated by, for example, the PDSCH generator 112A illustrated in Fig. 12. The transmission of the resource allocation information by the PDSCH signal may be considered as being an example of radio resource control (RRC).

After receiving the resource allocation information of the D2D resources (the RB #1), the DUE #1 generates the DS through the DS generator 263 (see Fig. 13), and transmits the DS (process P35). In the example of Fig. 15, the DS is received by the DUE #2.

Upon detecting the DS through the DS detector 252 (see Fig. 13), the DUE #2 generates the DS response signal through the DS response generator 262, and transmits the DS response signal to the DUE #1 (process P36). Upon detecting the reception of the DS response signal through the DS response detector 253, the DUE #1 establishes a pair of the D2D communication with the transmission source DUE #2 of the DS response signal.

Meanwhile, the wireless base station 10 determines an allocation of the radio resources to be used to transmit the SRS through the CUE 20 (for example, the CUE #3) (process P37). The allocation of the radio resources for the SRS transmission may be "quasi-static."

As the allocation of the radio resources for the SRS transmission is determined, the wireless base station 10 transmits, the resource allocation information for the SRS transmission to the CUE #3 through, for example, the PDSCH (process P38). The PDSCH signal including the resource allocation information for the SRS transmission (hereinafter, also referred to as "SRS resource allocation information") is generated by, for example, the PDSCH generator 112A illustrated in Fig. 12. The transmission of the PDSCH signal including the SRS resource allocation information may be considered as being an example of radio resource control (RRC).

The CUE #3 demodulates the SRS resource allocation information transmitted from the wireless base station 10 using the PDSCH through the PDSCH demodulator 231 (see Fig. 14). Based on the demodulated SRS resource allocation information, the CUE #3 generates the SRS through the SRS generator 271, and transmits the SRS (process P39).

Here, the SRS transmitted from the CUE #3 may interfere with the D2D communication between the DUE #1 and the DUE #2. For example, the DUE #2 measures the interference level of the SRS transmitted from the CUE #3 for the D2D communication, and detects the SRS resources (the interference source resources)having a relatively high interference level through the interference source resource detector 241 (see Fig. 13) (process P40).

When the SRS is multiplexed in the comb form in the last symbol (sub-band) of the sub-frame in the frequency division manner as illustrated in Fig. 4, a sub-frame and a sub-band having a relatively high interference level are detected as the interference source resources. The DUE #2 reports the interference source resource information indicated by the detected sub-frame and the sub-band (for example, the RB number and the comb number) to the wireless base station 10 through, for example, the PUSCH (process P41). The PUSCH signal including the interference source resource information is generated through the PUSCH generator 242 illustrated in Fig. 13.

When the interference source resource information is received and demodulated through the PUSCH demodulator 123 illustrated in Fig. 12, the wireless base station 10 transfers the interference source resource information to the scheduler 111 (the PUSCH scheduler 111B). The PUSCH scheduler 111B specifies the interference source CUE #3 for the DUE #1 which is allocated with the SRS resources indicated by the interference source resource information with reference to the SRS scheduling history (process P42).

When the interference source CUE #3 is specified, the wireless base station 10 transmits the C-RNTI of the interference source CUE #3 to the DUE #2 using the PDSCH through the PUSCH scheduler 111B and the PDSCH generator 112A (process P43).

Upon receiving the C-RNTI of the interference source CUE #3 from the wireless base station 10, the DUE #2 enters a state in which it is possible to try to demodulate and decode the UL grant transmitted from the wireless base station 10 to the interference source CUE #3.

Meanwhile, when the transmission request for the UL grant is received from the CUE #3, the wireless base station 10 determines an allocation of the frequency resources that are allowed to be used for the UL transmission by the CUE #3 through the PUSCH scheduler 111B (see Fig. 12) (process P44). In the example of Fig. 15, the RB #1 is allocated to the CUE #3.

When the frequency resources of the RB #1 to be allocated to the CUE #3 are determined, the wireless base station 10 generates the UL grant including the resource allocation information indicating the RB #1 through the UL grant generator 112B, and transmits the UL grant to the CUE #3 through, for example, the PDCCH (process P45).

When the UL grant is successfully received, demodulated, and decoded by the PDCCH demodulator 232 (see Fig. 14), the CUE #3 performs the UL transmission (the transmission of the PUSCH signal) using the RB #1 indicated by the UL grant after 4 ms as illustrated in Fig. 6 (process P46).

Here, the PDCCH signal including the UL grant addressed to the CUE #3 is also received by the DUE #2 located within the cell 100 of the wireless base station 10 (see Fig. 1). The DUE #2 tries to decode the PDCCH signal addressed to the CUE #3 through the PDCCH demodulator 232 (see Fig. 13) using the C-RNTI of the interference source CUE #3 received in process P43. When the PDCCH signal is successfully decoded, the DUE #2 can acquire the allocation information of the frequency resources of the RB #1 allocated from the wireless base station 10 to the CUE #3 for the UL cellular communication (process P47).

Thus, the DUE #2 can recognize that there is a possibility that interference will occur when the transmission of the D2D communication to the DUE #1 is performed using the RB #1 allocated from the wireless base station 10 to the CUE #3. Thus, the DUE #2 does not perform the transmission of the D2D communication (the PUSCH transmission) using the RB #1 (process P48). Alternatively, the DUE #1 may perform the transmission to the DUE #2 (the PUSCH transmission) using other frequency resources not overlapping with the RB #1.

For example, control of transmission data of the D2D communication by the scheduler 261 (see Fig. 13) may be performed by performing scheduling of D2D data to be transferred to the D2D data signal generator 264 to avoid the frequency resources (RB) overlapping with the RB #1.

In other words, when the RB (the D2D resources) is different from the frequency resources indicated by the UL grant addressed to the CUE #3, the DUE #2 may perform the transmission to the DUE #2 using the D2D resources.

For example, as illustrated in processes P49 to P53 of Fig. 15, when the UL grant addressed to the CUE #3 indicates the RB #2, no interference with the cellular communication occurs although the DUE #2 performs the D2D communication (the PUSCH transmission) using the RB #1. Thus, the DUE #2 may perform the PUSCH transmission to the DUE #1 using the RB #1.

The DUE #1 establishing a pair of the D2D communication with the DUE #2 can also perform the transmission of the D2D communication by avoiding the use of the RB #1 used for the cellular communication by the CUE #3, similarly to the process in the DUE #2. The same applies to the DUE 20 establishing a pair of other D2D communication.

Further, in the example described above with reference to Fig. 15, the interference level measurement target of the DUE 20 is the SRS, but similarly to the first embodiment, the PUSCH signal may be the interference level measurement target of the DUE 20. In other words, the first embodiment and the second embodiment may be combined and carried out.

Further, in the example described above with reference to Fig. 15, the DUE 20 that has received the C-RNTI of the interference source CUE 20 from the wireless base station 10 tries to decode the UL grant addressed to the interference source CUE 20, but the DUE 20 may be temporarily inhibited from trying to decode the UL grant and performing the D2D communication.

Accordingly, the interference between the cellular communication and the D2D can be prevented. Thus, the DUE 20 (for example, the DUE #1) at the reception side of the D2D communication can receive a data signal of a sufficient quality from the DUE 20 (for example, the DUE #2) at the transmission side through the D2D communication regardless whether or not the interference component of the cellular communication is included.

Further, since the DUE 20 at the transmission side of the D2D communication does not perform transmission using the frequency resources that are unlikely to be properly received by the DUE 20 at the reception side although it performs the data transmission, it is possible to prevent interference with surrounding communication caused by unnecessary data transmission. In other words, the DUE 20 at the transmission side can be prevented from functioning as the interference source of other communication. For example, "other communication" is the cellular communication or another D2D communication of the CUE 20 located near the DUE 20 at the transmission side.

As described above, according to the above embodiments, the radio resources (for example, the frequency resources) can be shared by the respective communications while preventing the cellular communication from interfering with the D2D communication, and thus the system capacity of the wireless communication system 1 can be increased.

In other words, in the wireless communication system 1, the D2D communication and the cellular communication can efficiently coexist, and thus the wireless communication performance can be improved.

In the above example, the UL frequency resources have been described as an example of the radio resources that can be shared by the cellular communication and the D2D communication (that is, that may have interference), but the radio resources that can be shared by the cellular communication and the D2D communication may be the DL frequency resources or may be the time resources.

### REFERENCE NUMERALS LIST

- 1: wireless communication system
- 10: wireless base station
- 111: scheduler
- 111A: D2D scheduler
- 111B: PUSCH scheduler
- 112A: PDSCH generator
- 112B: PDCCH (UL grant) generator
- 113: physical channel multiplexer
- 114: transmission RF unit
- 115: transmission antenna
- 121: reception antenna
- 122: reception RF unit
- 123: PUSCH demodulator
- 20-1 to 20-N, 20C, 20D: mobile station (UE, DUE, CUE)
- 211, 212, 213: reception antenna
- 214, 215: transmission antenna
- 221, 222, 223: reception RF unit
- 224, 225: transmission RF unit
- 231: PDSCH demodulator
- 232: PDCCH demodulator
- 241: interference source resource detector
- 242: PUSCH generator
- 251: D2D data signal demodulator
- 252: DS detector
- 253: DS response detector
- 261: scheduler
- 262: DS response generator
- 263: DS generator
- 264: D2D data signal generator
- 265: switch
- 271: SRS generator
- 272: physical channel multiplexer

## Claims

1. A wireless communication system, comprising:
a first wireless device that performs wireless communication with a wireless base station; and
a second wireless device that performs device-to-device communication, the device-to-device communication being performed without going through the wireless base station,
wherein the second wireless device is configured to receive a signal transmitted from the first wireless device and transmit information of a radio resource of the received signal to the wireless base station, the radio resource being relatively higher in interference level for the device-to-device communication than that of another resource.

2. The wireless communication system according to claim 1,
wherein the wireless base station specifies, based on the information of the radio resource received from the second wireless device, the first wireless device being allocated with the radio resource with the higher interference level, and
the wireless base station controls a radio resource for a signal to be transmitted by the specified first wireless device to a radio resource not overlapping with a radio resource used for the device-to-device communication.

3. The wireless communication system according to claim 1,
wherein the wireless base station specifies, based on the information of the radio resource received from the second wireless device, the first wireless device being allocated with the radio resource with the higher interference level, and
the wireless base station transmits identification information of the specified first wireless device to the second wireless device.

4. The wireless communication system according to claim 3,
wherein the second wireless device decodes allocation information of a radio resource using the identification information of the first wireless device received from the wireless base station, the allocation information being encoded with the identification information and being transmitted for the first wireless device by the wireless base station, and controls a radio resource used for the device-to-device communication to a radio resource not overlapping with a radio resource indicated by a result of the decoding.

5. The wireless communication system according to any one of claims 1 to 4,
wherein the signal that is transmitted from the first wireless device and received by the second wireless device is a physical uplink shared channel (PUSCH) signal, and
the information of the radio resource with the higher interference level includes information of a resource block being allocated for transmission of the PUSCH signal and being identified by a frequency and a time.

6. The wireless communication system according to any one of claims 1 to 4,
wherein the signal that is transmitted from the first wireless device and received by the second wireless device is a sounding reference signal (SRS), and
the information of the radio resource with the higher interference level includes information of a sub-frame and a sub-band allocated for transmission of the SRS.

7. A wireless communication method, comprising:
transmitting, by a first wireless device that performs wireless communication with a wireless base station, a signal; and
receiving, by a second wireless device, the signal and transmitting information of a radio resource of the received signal to the wireless base station, the second wireless device performing device-to-device communication without going through the wireless base station, the radio resource being relatively higher in interference level for the device-to-device communication than that of another resource.

8. A wireless device that performs device-to-device communication without going through a wireless base station, the wireless device comprising:
a first receiver configured to receive a signal transmitted by another wireless device that performs wireless communication with the wireless base station;
a detector configured to detect a radio resource being relatively higher in interference level of the signal received by the first receiver for the device-to-device communication than that of another resource; and
a transmitter configured to transmit information of the radio resource detected by the detector to the wireless base station.

9. The wireless device according to claim 8, further comprising,
a second receiver configured to receive identification information of said another wireless device from the wireless base station, said another wireless device being specified by the wireless base station based on the information of the detected radio resource as being allocated with the detected radio resource.

10. The wireless device according to claim 9, further comprising:
a decoder configured to decode allocation information of a radio resource using the identification information received by the second receiver, the allocation information being encoded with the identification information and being transmitted for said another wireless device by the wireless base station; and
a controller configured to control a radio resource used for the device-to-device communication to a radio resource not overlapping with a radio resource indicated by a result of the decoding.

11. A wireless base station that performs wireless communication with a first wireless device, comprising:
a receiver configured to receive information of a radio resource from a second wireless device that performs device-to-device communication without going through the wireless base station, the radio resource being relatively higher in interference level of a signal transmitted by the first wireless device for the device-to-device communication than that of another resource.

12. The wireless base station according to claim 11 further comprising,
a controller configured to:
specify the first wireless device being allocated with the radio resource with the higher interference level based on the information of the radio resource received by the receiver; and
control a radio resource for a signal to be transmitted by the specified first wireless device to a radio resource not overlapping with a radio resource used for the device-to-device communication.

13. The wireless base station according to claim 11, further comprising,
a transmitter configured to transmit identification information of the first wireless device to the second wireless device, the first wireless device being specified based on the information of the radio resource received by the receiver as being allocated with the radio resource.
